# EUROPÄISCHE PATENTANMELDUNG

(11) **EP 1 207 614 A1**
(43) Veröffentlichungstag der Anmeldung: **22.05.2002**
(21) Anmeldenummer: 00125136.2
(22) Anmeldetag: 17.11.2000
(51) Int. Cl.: H02K 7/08, F16C 25/04, F16C 25/08, H02K 5/167

(54) **Anordnung zum Axialspielausgleich**

(71) Anmelder: SIEMENS AKTIENGESELLSCHAFT, 80333 München (DE)
(72) Erfinder: Zaps, Klaus, 97332 Volkach (DE)

(57) **Zusammenfassung**

Zur Minderung des Bauteile- und des Fertigungsaufwandes bei einem Axialspielausgleich einer Rotorwelle (5) relativ zu einem Statorteil (4) ist ein auf der Rotorwelle (5) fixiertes axiales Sicherungselement (1), insbesondere in Form eines radial aufsteckbaren Spreizringes (1.1;1.2), mit einem axial elastisch gegen den Statorteil (4) im Sinne eines Axialspielausgleiches andrückbaren Federelement (1.3;1.4), insbesondere in Form von einstückig angestanzten Federschenkeln (1.3 bzw. 1.4), integriert; durch eine Zwischenscheibe (2) mit gegen das Federelement (1.3;1.4) andrückenden axialen Anschlag-Puffern (2.1;2.2) an der einen Stirnseite und einer Gleitfläche (2.4) gegenüber dem Statorteil (4), insbesondere der Lagerstirnfläche eines Gleitlagers (3), an der anderen Stirnseite ist ein besonders betriebssicherer Axialspielausgleich mit definierbarem Federweg gewährleistbar.

## Beschreibung

Die Erfindung bezieht sich auf eine Anordnung zum Axialspielausgleich gemäß Patentanspruch 1.

Durch die EP 0 133 527 B2 ist eine Anordnung zur Begrenzung des Axialspiels einer gleitgelagerten Rotorwelle eines Motorantriebs gegenüber dessen Gehäuseteil derart bekannt, dass gemäß einem jeweils gemessenen Axialspiel eine Scheibe entsprechender Scheibendicke als axiales Anlaufteil gehäuseseitig feststeckbar ist.

Durch die FR-A-1 415 584 bzw. FR-A-2 253 940 sind Motor- bzw. Motorgetriebe-Anordnungen mit einem elastischen axialen Anlaufteil in Form von gehäuseseitig zu haltenden Federelementen bekannt.

Gemäß Aufgabe vorliegender Erfindung soll ein Axialspielausgleich mit demgegenüber, insbesondere für einen als Massenserienartikel herzustellenden Kraftfahrzeug-Verstellantrieb vorteilhaft, vermindertem Bauteile- und Fertigungsaufwand bei gewährleisteter Betriebssicherheit geschaffen werden.

Die Lösung dieser Aufgabe gelingt erfindungsgemäß durch eine Anordnung zum Axialspielausgleich gemäß Patentanspruch 1; vorteilhafte Ausgestaltungen der Erfindung sind jeweils Gegenstand der Unteransprüche.

Durch die Integration eines, üblicherweise zur axialen Lage-Anschlagsicherung bereits vorhandenen, Sicherungselementes, insbesondere eines in einen Rotorwelleneinstich radial einzudrückenden Spreizringes, mit einem Federelement, insbesondere in Form von Federelement-Armen, vermindern sich die Fertigungsteile und die Montageschritte.

Der Fertigungsaufwand ist weiter reduzierbar, wenn das Sicherungselement und das Federelement Teile eines einstückigen Blech-Flachstanzteiles sind.

Durch eine zwischen dem Sicherungs- und Federelement einerseits und dem Statorteil andererseits drehfest zu dem Sicherungs- und Federelement vorgesehene Zwischenscheibe mit axialen Anschlag-Puffern an ihrer einen Stirnseite und einer Gleitfläche an ihrer anderen, zum Anlauf an den Statorteil vorgesehenen Stirnseite lässt sich sowohl ein definierbarer Federweg bei der elastischen Verformung des Federelementes als auch eine hohe aufgrund geringen Verschleißes gewährleistete Betriebssicherheit bei langen Betriebsstandzeiten gewährleisten.

Die Erfingung sowie vorteilhafte Ausgestaltungen der Erfindung gemäß Merkmalen der Unteransprüche werden im folgenden anhand von Ausführungsbeispielen in der Zeichnung näher erläutert; darin zeigen:
- FIG 1: in perspektivischer Explosionsdarstellung den Rotor eines Kommutatormotors mit gegenüber einem Statorteil erfindungsgemäßem Axialspielausgleich;

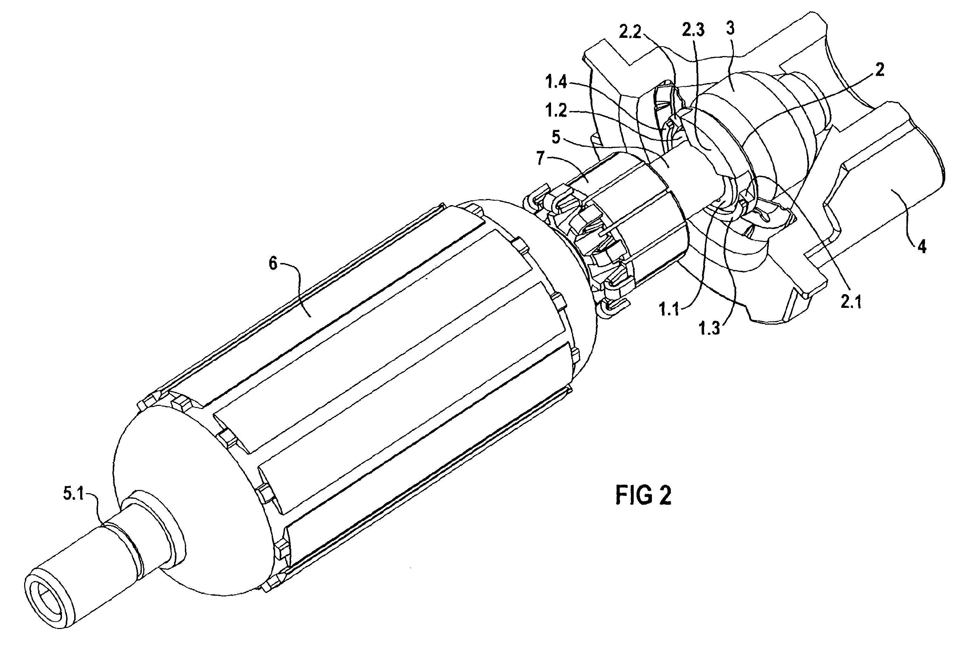

- FIG 2: die Anordnung gemäß FIG 1 in betriebsmäßiger Montagestellung;
- FIG 3: in perspektivischer Explosionsdarstellung ein Sicherungselement mit erfindungsgemäß integriertem Federelement und eine zugeordnete Zwischenscheibe;
- FIG 4: die Anordnung gemäß FIG 3 in betriebsmäßiger Montagestellung;
- FIG 5: die Anordnung gemäß FIG 4 in einer anderen Ansichtsrichtung.

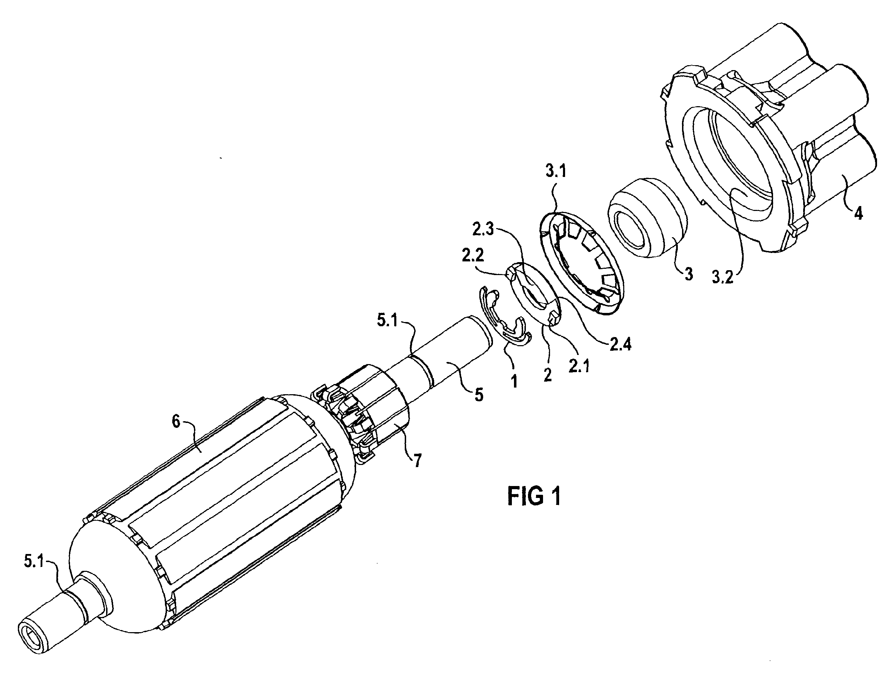

FIG 1 zeigt in perspektivischer Explosionsdarstellung einen gegenüber einem Statorteil 4 mit einer erfindungsgemäßen Anordnung zum Axialspielausgleich versehenen Rotor mit einer Rotorwelle 5 und darauf gehaltertem, noch unbewickelten Rotorpaket 6 sowie Kommutator 7. Die Rotorwelle 5 ist in einer Kalotte 3 gelagert, die mittels einer Klemmbrillen 3.1 in einer Kalottenaufnahme 3.2 des Statorteils 4 einstellbar gehalten ist.

Zur axialen Abstützung der Rotorwelle 5 gegenüber dem Statorteil 4 dient ein Sicherungselement 1 in Form eines Spreizringes 1.1;1.2, das im vorliegenden Ausführungsbeispiel zur axialen Fixierung in einen Welleneinstich in Form einer Ringnut 5.1 eingreift und durch Klemmschluß mittels dazu radial aufgesteckter Spreizfinger 1.1 bzw.1.2 auch tangential fixierbar ist.

Zum elastisch federnden Axialspielausgleich zwischen der Rotorwelle 5 einerseits und dem Statorteil 4 andererseits ist erfindungsgemäß das Sicherungselement 1 als Federelement 1.3;1.4 ausgebildet und weist dazu je einen, zu jedem Spreizfinger 1.1 bzw.1.2 konzentrischen äußeren Federschenkel 1.3 bzw. 1.4 auf, der jeweils mit einem freien Schenkelende axial elastisch auslenkbar und mit seinem anderen Schenkelende über ein Joch 1.5 einstückig mit den Spreizfingern 1.2 bzw.1.3 an ihren den freien Schenkelenden abgewandten Enden verbunden ist.

Axial zwischen der Abstützung an dem mit dem Sicherungselement 1 integrierten Federelement 1.3;1.4 einerseits und der Abstützung an dem Statorteil 4 bzw. an dem von diesem gehalterten Kalottenlager 3 andererseits ist eine zu der Rotorwelle 5 bewegliche, mit dem Sicherungselement 1 in Drehmitnahme stehende, Zwischenscheibe 2 vorgesehen, die in vorteilhafter Weise an ihrer dem Statorteil 4 bzw. der Kalotte 3 zugewandten Stirnseite eine korrespondierende Gleitfläche 2.4 bzw. an ihrer dem Sicherungselement 1 bzw. Federelement 1.3;1.4 zugewandten Stirnseite axial vorstehende Anschlag-Puffer 2.1;2.2 aufweist, über die das Federelement 1.3;1.4, insbesondere die freien Enden von dessen Federschenkeln 1.3 bzw.1.4, axial elastisch wegdrückbar sind.

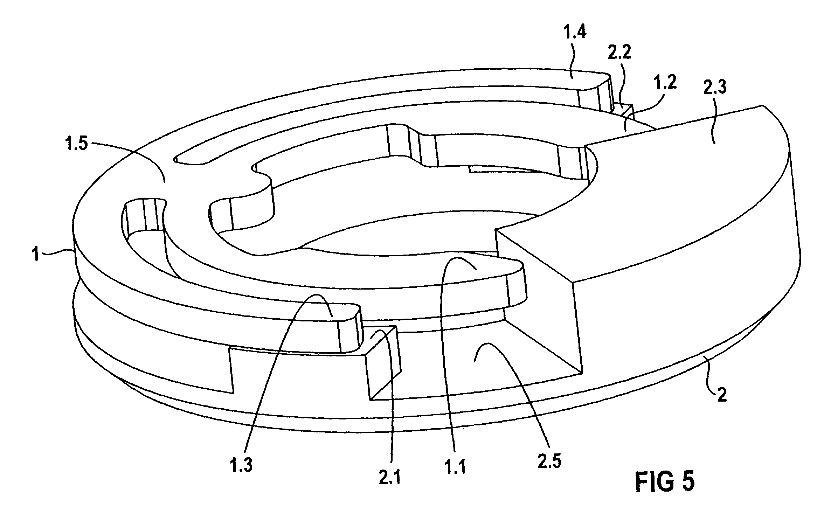

Wie insbesondere aus FIG 5 ersichtlich, ist durch die axiale Höhe der Anschlag-Puffer 2.1 bzw.2.2 gegenüber der bei einem Axialspielausgleich als axialer Anschlag für die im unausgelenkten Zustand mit den Federschenkeln 1.3 bzw.1.4 in einer Ebene liegenden Spreizfingern 1.1 bzw.1.2 wirkende Grundplatte 2.5 bzw.2.6 der maximale axiale Federweg auf einfache Weise festlegbar.

Zur gegenseitigen Ausrichtung der Zwischenscheibe 2 einerseits und des Sicherungselementes 1 mit den Federschenkeln 1.3 bzw.1.4 andererseits, insbesondere in für eine einfache axiale Steck-Montage vorteilhafter Weise, weist die Zwischenscheibe 2 ein axial vorstehendes, betriebsmäßig zwischen den freien Enden der Federschenkel 1.1 bzw.1.2 angeordnetes Paßstück 2.3 auf.

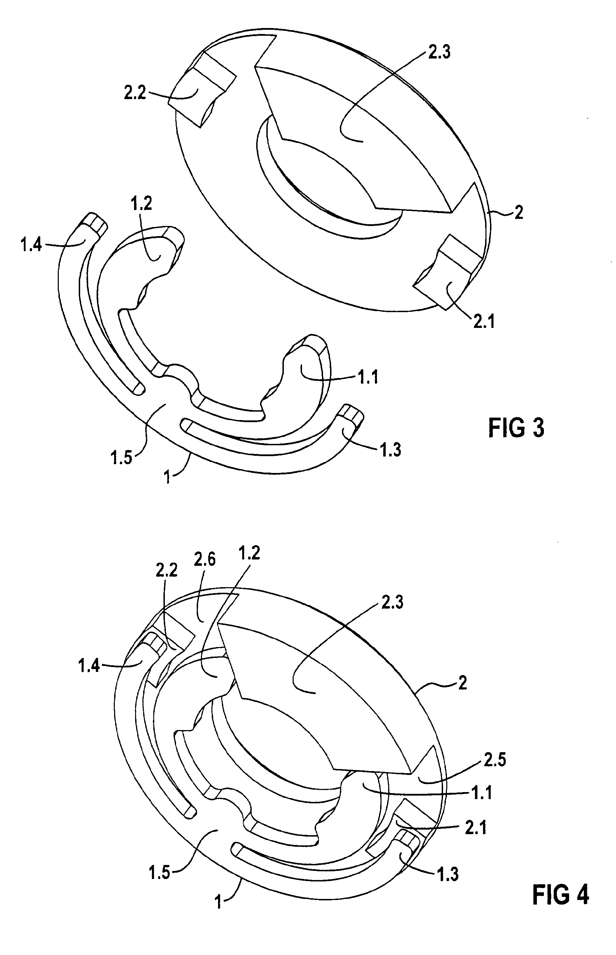

In fertigungs- und montagetechnisch vorteilhafter Weise bestehen - wie insbesondere aus FIG 3 ersichtlich - das Sicherungselement 1 mit seinen Spreizfingern 1.1 bzw.1.2 und das Federelement 1.3;1.4 mit seinen Federschenkeln 1.3 bzw.1.4 aus einem - durch eine Joch-Verbindung 1.5 - einstückigen Blech-Flachstanzteil und die Zwischenscheibe 2 einschließlich der Anschlag-Puffer 2.1 bzw.2.2 und des Paßstücks 2.3 aus einem einstückigen, insbesondere spritzgegossenen, Kunststoffteil.

Der Gegenstand der Erfindung einschließlich einer wesentlichen Ausgestaltung lässt sich wie folgt kurz charakterisieren:
Zur Minderung des Bauteile- und des Fertigungsaufwandes bei einem Axialspielausgleich einer Rotorwelle 5 relativ zu einem Statorteil 4 ist ein auf der Rotorwelle 5 fixiertes axiales Sicherungselement 1, insbesondere in Form eines radial aufsteckbaren Spreizringes 1.1;1.2, mit einem axial elastisch gegen den Statorteil 4 im Sinne eines Axialspielausgleiches andrückbaren Federelement 1.3;1.4, insbesondere in Form von einstückig angestanzten Federschenkeln 1.3;1.4 integriert; durch eine Zwischenscheibe 2 mit gegen das Federelement 1.3;1.4 andrückenden axialen Anschlag-Puffern 2.1;2.2 an der einen Stirnseite und einer Gleitfläche 2.4 gegenüber dem Statorteil 4, insbesondere der Lagerstirnfläche eines Gleitlagers 3, an der anderen Stirnseite ist ein besonders betriebssicherer Axialspielausgleich mit definierbarem Federweg gewährleistbar.

## Patentansprüche

1. Anordnung zum Axialspielausgleich einer Rotorwelle (5) relativ zu einem diese aufnehmenden Statorteil (4), insbesondere einem Rotorwellen-Lager (3;3.1;3.2),
- mit einem auf der Rotorwelle (5) fixierbaren und deren Umfang zumindest über einen tangentialen Teilbereich umfassenden aixalen Sicherungselement (1), insbesondere in Form eines auf die Rotorwelle (5) aufsteckbaren Spreizringes (1.1;1.2);
- mit einem axial elastisch gegen den Statorteil (4) im Sinne eines Axialspielausgleiches andrückenden Federelement (1.3;1.4) als Teil des Sicherungselementes (1).

2. Anordnung nach Anspruch 2
- mit einer Ausbildung des Federelementes (1.3;1.4) als einstückiger Bestandteil des Sicherungselementes (1).

3. Anordnung nach Anspruch 2
- mit einer Ausbildung des Sicherungselementes (1) und des Federelementes (1.3;1.4) als einstückige Bestandteile eines Blech-Flachstanzteiles.

4. Anordnung nach zumindest einem der Ansprüche 1-3
- mit einer tangentialen Umfassung des Sicherungselementes (1) durch das Federelement (1.3;1.4) mittels zumindest eines Federschenkels (1.3 bzw.1.4), der jeweils mit einem freien Ende elastisch an dem Statorteil (4), insbesondere mittelbar, abstützbar und mit seinem anderen Ende an dem Sicherungselement (1) fixiert ist.

5. Anordnung nach zumindest einem der Ansprüche 1-4
- mit einer axialen Fixierung des Sicherungselementes (1) relativ zu der Rotorwelle (5) durch Eingriff, insbesondere radiale Einsteckbarkeit, in eine Ringnut (5.1) der Rotorwelle (5).

6. Anordnung nach zumindest einem der Ansprüche 1-5
- mit einer federelastischen axialen Abstützbarkeit der Rotorwelle (5) an einer Kalotte (3) eines von dem Statorteil (4) aufgenommenen Rotorwellen-Lagers (3;3.1;3.2) in Form eines Kalottenlagers.

7. Anordnung nach zumindest einem der Ansprüche 1-6
- mit einer relativ zu der Rotorwelle (5) beweglichen Zwischenscheibe (2) axial zwischen dem Federelement (1.3;1.4) einerseits und dessen Abstützung an dem Statorteil (4) andererseits;
- mit einer Ausbildung der einen Stirnseite der Zwischenscheibe (2) als Gleitfläche (2.4) für die mittelbare bzw. unmittelbare Abstützung des Federelementes (1.3;1.4) an dem Statorteil (4);
- mit einer Ausbildung der anderen Stirnseite der Zwischenscheibe (2) als Andruckmittel zur elastischen Verformung des Federelementes (1.3;1.4) im Sinne eines Axialspielausgleiches.

8. Anordnung nach Anspruch 7
- mit einer axialen Formschluß-Steckverbindung zwischen dem Sicherungselement (1) und der Zwischenscheibe (2), insbesondere im Sinne einer gegenseitigen Drehmitnahme und axialen sowie tangentialen Ausrichtung.

9. Anordnung nach Anspruch 7 und/oder 8
- mit einer Ausbildung der Andruckmittel in Form von gegenüber der Zwischenscheibe (2) axial vorstehenden, durch ihren axialen Abstand gegenüber dieser die maximale elastische Auslenkung des Federelementes (1.3;1.4) definierenden Anschlag-Puffern (2.1;2.2).

10. Anordnung nach zumindest einem der Ansprüche 1-9
- mit einer Ausbildung der Zwischenscheibe (2) als, vorzugsweise einstückig die Anschlag-Puffer (2.1;2.2) und Formschlußmittel (2.3) mitumfassendes, Kunststoffteil.
